# EUROPEAN PATENT APPLICATION

(11) **EP 2 018 050 A1**
(43) Date of publication of application: **21.01.2009**
(21) Application number: 07742044.6
(22) Date of filing: 20.04.2007
(51) Int. Cl.: H04N 5/235, H04N 5/20, H04N 5/335

(54) **CAMERA DEVICE AND IMAGE PROCESSING METHOD**

(30) Priority: 01.05.2006 JP 2006127518
(71) Applicant: Opt Corporation, Chino-shi, Nagano 391-0013 (JP)
(72) Inventor: OGAWA, Tatsuro, Chino-shi Nagano 391-0013 (JP)
(74) Representative: Schäfer, Matthias W.
(86) International application number: PCT/JP2007/058609
(87) International publication number: WO 2007/129549

(57) **Abstract**

Provided is a camera apparatus capable of picking up an image by which an entirety of a subject can be checked even if there is a significant difference in brightness between parts of the subject. A plurality of picked-up images by picking up images of one subject with different exposure times or with different diaphragms are obtained. Then, a part of a picked-up image whose light-receiving level is without a predetermined light-receiving level is replaced by a part of another picked-up image which is photographed as a part whose light-receiving level is within the predetermined light-receiving level. The picked-up image composited by the replacement is displayed as a monitor picture.

## Description

### Technical Field

The present invention relates to a camera apparatus.

### Background Art

An example of a camera apparatus using an image-pickup element such as a CCD or CMOS sensor is disclosed in JP 2004-271902 A. Such a camera apparatus is controlled so that a charge storage amount due to a picked-up image is kept within a dynamic range of the image-pickup element by changing a diaphragm diameter depending on a luminance of a subject or changing a frame rate.

For example, in a case of photographing an inside of a room, since the luminance of the subject is low in general, the diaphragm diameter is increased to raise the luminance of the picked-up image, or the frame rate is reduced to lengthen a charge storage time for the image-pickup element, to thereby increase the charge storage amount of the image-pickup element to a sufficient amount.

In contrast, in a case of photographing an outside during a sunny day, since the luminance of the subject is high enough, in order to keep the charge storage amount of the image-pickup element from becoming saturated, the diaphragm diameter is reduced to lower the luminance of the picked-up image, or the frame rate is increased, to thereby shorten the charge storage time for the image-pickup element.

Patent Document 1: JP2003-247902A (refertodescription in ABSTRACT and the like)

### Disclosure of the Invention

### Problems to be solved by the Invention

However, with such a conventional camera apparatus, in a case where, for example, an inside of a dim room and a bright electric light therein are photographed together, if a diaphragm diameter and a frame rate are set in accordance with a brightness of the entire room, a picked-up image of a part including the electric light and a subject located in a periphery thereof results in overexposure. In other words, the charge storage amount becomes saturated in an image-pickup element existing in a position where light is imaged to form the picked-up image of the part of the electric light and the periphery thereof. Then, the picked-up image of this part becomes whitish, or becomes flat in white, that is, a so-called "white void".

In contrast, if the diaphragm diameter and the frame rate are set in accordance with the brightness of the electric light, a picked-up image of the other part than the electric light and the subj ect located in the periphery thereof results in underexposure. In other words, the charge storage amount becomes insufficient in an image-pickup element existing in a position where light is imaged to form the picked-up image of this part. Then, the picked-up image of this part becomes blackish, or becomes flat in black, that is, a so-called "black solid".

A case of photographing an outside during a sunny day raises a similar problem that if the diaphragm diameter and the frame rate are set in accordance with a brightness of the bright outside, a picked-up image of the part of the shade results in underexposure, becoming a black solid. In contrast, if the diaphragm diameter and the frame rate are set in accordance with a brightness of the part of the shade, a picked-up image of the other part than the part of the shade results in overexposure, generating a white void.

Therefore, if there is a significant difference in brightness between parts of the subject, an overexposed part or an underexposed part is generated in the picked-up image. This raises a problem that a white void is generated in the overexposed part, while a black solid is generated in the underexposed part, making it difficult to recognize a content of the picked-up image in the part of the white void or the black solid.

Such a problem particularly tends to come closer to the surface when a photographic lens has a wider angle of view. In other words, in a case where a wide-angle lens is used as the photographic lens to pick up an image of a subject within a wide range, it becomes highly possible that the image of the subject exhibiting different luminances is picked up. This is likely to raise a problem that a significant difference occurs in the brightness of the subject, and that if the diaphragm diameter and an exposure time are set with the brightness of a part of the subject as a reference, the picked-up image of the other part results in overexposure or underexposure to thereby generate a white void or a black solid in the other part, making it difficult to recognize the content of the picked-up image.

Therefore, it is an object of the present invention to provide a camera apparatus capable of picking up an image by which an entirety of a subject can be recognized even if there is a significant difference in brightness between parts of the subject.

### Means for solving the Problems

In order to solve the above-mentioned problems, a camera apparatus according to the present invention includes: a photographic lens; image-pickup means on which light from a subject transmitted through the photographic lens is imaged; and image processing control means for performing an image processing on image data on a picked-up image obtained by imaging the light on the image-pickup means, the subject being continuously photographed. The camera apparatus further includes: exposure time changing means for changing an exposure time for the image-pickup means between at least 2 stages of exposure times at a predetermined timing; light-receiving level measuring means for measuring a light-receiving level of the image-pickup means in units of parts of the picked-up image; light-receiving level judging means for judging whether or not the light-receiving level of the image-pickup means which has been measured in units of parts is within a predetermined light-receiving level; and image replacing means for replacing, if a part whose light-receiving level has been judged by the light-receiving level judging means is an improper light-receiving level part whose light-receiving level is not judged as being within the predetermined light-receiving level, image data on the improper light-receiving level part by image data on a proper light-receiving level part which is a part of another picked-up image in a position of an image corresponding to the improper light-receiving level part and whose light-receiving level is judged as being within the predetermined light-receiving level.

By thus structuring and configuring the camera apparatus, it is possible to obtain a plurality of picked-up images by picking up images of one subject with different exposure times. Therefore, even when one of the picked-up images includes a part whose light-receiving level is without the predetermined light-receiving level, some of the other picked-up images may have the same part obtained by the photographing as a part whose light-receiving level is within the predetermined light-receiving level. Then, by replacing the part whose light-receiving level is without the predetermined light-receiving level by a part which is a part of another picked-up image corresponding to this part and whose light-receiving level is within the predetermined light-receiving level, it is possible to obtain a picked-up image in which the part whose light-receiving level is without the predetermined light-receiving level is made to exhibit a luminance level within a predetermined luminance level.

Further, according to another invention, in addition to the above-mentioned invention, if there are a plurality of picked-up images having the proper light-receiving level part to replace the improper light-receiving level part, the improper light-receiving level part is replaced by the proper light-receiving level part of a picked-up image picked up at a timing the closest to a timing at which the picked-up image having the improper light-receiving level part is picked up.

By thus structuring and configuring the camera apparatus, a change can be made small between the picked-up image of the replaced part and the picked-up image of the replacing part, which can reduce an unusual feeling in continuity between the replaced part of the picked-up image and the unreplaced part thereof.

Further, according to another invention, in addition to the above-mentioned invention, the exposure time changing means changes the exposure time every frame picked up by the image-pickup means.

By thus structuring and configuring the camera apparatus, the change is set small between the picked-up image of the replaced part and the picked-up image of the replacing part, which can reduce an unusual feeling in continuity between the replaced part of the picked-up image and the unreplaced part thereof.

Further, according to another invention, in addition to the above-mentioned invention, the exposure time changing means includes frame rate changing means.

By thus structuring and configuring the camera apparatus, the exposure time can be changed more easily at an earlier timing.

Further, according to another invention, in addition to the above-mentioned invention, the exposure time changing means includes shutter speed changing means.

By thus structuring and configuring the camera apparatus, the exposure time can be changed more easily at an earlier timing.

Further, according to another invention, in addition to the above-mentioned invention, one exposure time of the at least 2 stages of exposure times includes an exposure time that causes the light-receiving level of the improper light-receiving level part to be within the predetermined light-receiving level.

By thus structuring and configuring the camera apparatus, the improper light-receiving level part can be picked up effectively with the light-receiving level thereof within the predetermined light-receiving level. In other words, it is possible to reliably obtain the proper light-receiving level part for replacing the improper light-receiving level part.

Further, according to another invention, in addition to the above-mentioned invention, the photographic lens includes a wide-angle lens.

By thus structuring and configuring the camera apparatus, in addition to the effects of the above-mentioned invention, it is possible to photograph the subject with a wide range.

In order to solve the above-mentioned problems, an image processing method according to the present invention, which performs an image processing on a picked-up image of a subject obtained by imaging light therefrom on image-pickup means by a photographic lens, includes: exposure time changing step of changing an exposure time for the image-pickup means between at least 2 stages of exposure times at a predetermined timing; light-receiving level measuring step of measuring a light-receiving level of the image-pickup means in units of parts of the picked-up image; light-receiving level judging step of judging whether or not the light-receiving level of the image-pickup means which has been measured in units of parts is within a predetermined light-receiving level; and image replacing step of replacing, if a part whose light-receiving level has been judged by the light-receiving level judging step is an improper light-receiving level part whose light-receiving level is not judged as being within the predetermined light-receiving level, image data on the improper light-receiving level part by image data on a proper light-receiving level part which is a part of another picked-up image in a position of an image corresponding to the improper light-receiving level part and whose light-receiving level is judged as being within the predetermined light-receiving level.

By employing such a method as the image processing method, it is possible to obtain a plurality of picked-up images by picking up images of one subject with different exposure times. Therefore, even when one of the picked-up images includes a part whose light-receiving level is without the predetermined light-receiving level, some of the other picked-up images may have the same part obtained by the photographing as a part whose light-receiving level is within the predetermined light-receiving level. Then, by replacing the part whose light-receiving level is without the predetermined light-receiving level by a part which is a part of another picked-up image corresponding to this part and whose light-receiving level is within the predetermined light-receiving level, it is possible to obtain a picked-up image in which the part whose light-receiving level is without the predetermined light-receiving level is made to exhibit a luminance level within a predetermined luminance level.

In order to solve the above-mentioned problems, a camera apparatus according to the present invention includes: a photographic lens; image-pickup means on which light from a subject transmitted through the photographic lens is imaged; and image processing control means for performing an image processing on image data on a picked-up image obtained by imaging the light on the image-pickup means, the subject being continuously photographed, in which high clarity parts of a plurality of picked-up images which are obtained by changing an exposure time for the image-pickup means between at least 2 stages of exposure times during photographing and which are different in the exposure time are composited with each other to record or display a picked-up image high in clarity as a whole.

By thus structuring and configuring the camera apparatus, it is possible to obtain a plurality of picked-up images by picking up images of one subject with different exposure times. Therefore, a high clarity part of the picked-up image is generated in each of the plurality of picked-up images. By compositing the high clarity parts with each other, it is possible to record or display the picked-up image high in clarity as a whole.

In order to solve the above-mentioned problems, an image processing method according to the present invention performs an image processing on a picked-up image of a subj ect obtained by imaging light therefrom on image-pickup means by a photographic lens, in which: an exposure time for the image-pickup means is changed between at least 2 stages of exposure times during photographing to obtain a plurality of picked-up images different in the exposure time; and high clarity parts of the plurality of picked-up images different in the exposure time are composited with each other to record or display a picked-up image high in clarity as a whole.

By employing such a method as the image processing method, it is possible to obtain a plurality of picked-up images by picking up images of one subject with different exposure times. Therefore, a high clarity part of the picked-up image is generated in each of the plurality of picked-up images. By compositing the high clarity parts with each other, it is possible to record or display the picked-up image high in clarity as a whole.

### Effects of the Invention

According to the camera apparatus and the image processing method according to the present invention, it is possible to pick up an image by which an entirety of a subject can be checked even if there is a significant difference in brightness between parts of the subject.

### Brief Description of the Drawings

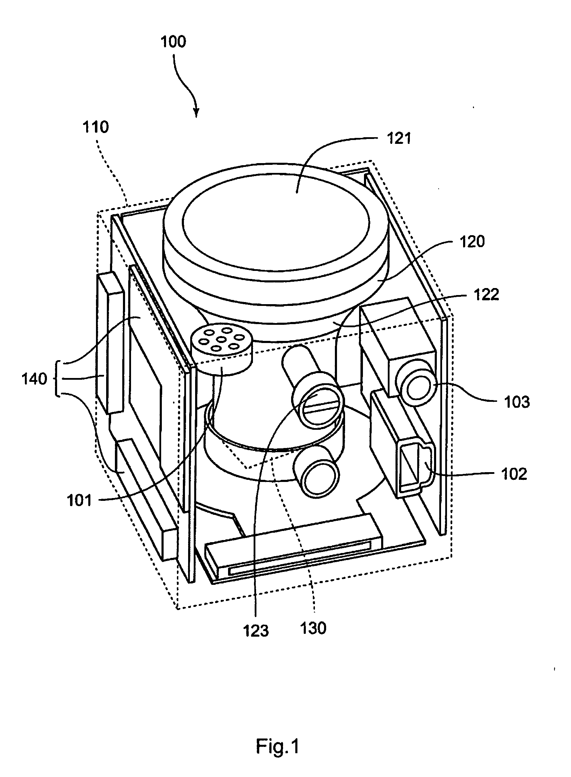

[FIG. 1] is a perspective view illustrating a structure of a camera apparatus according to an embodiment of the present invention.

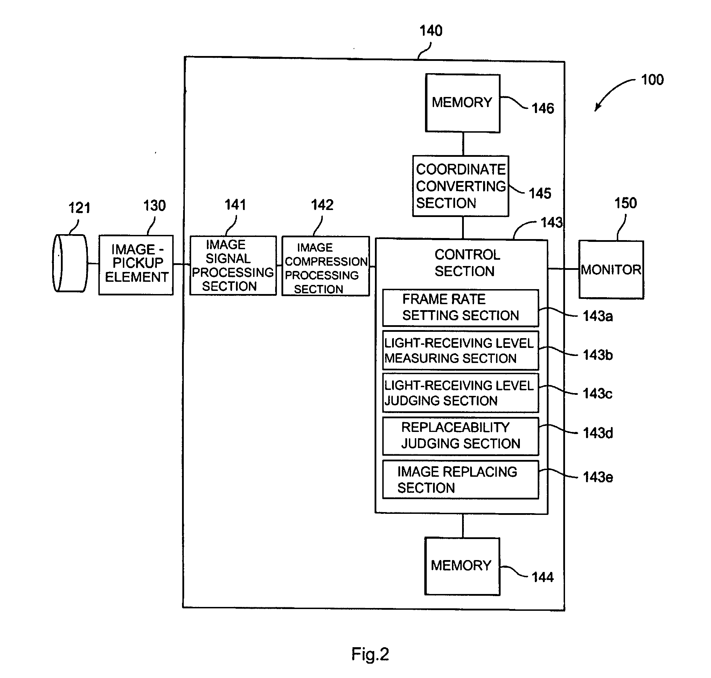

[FIG. 2] is a block diagram illustrating a configuration of the camera apparatus of FIG. 1.

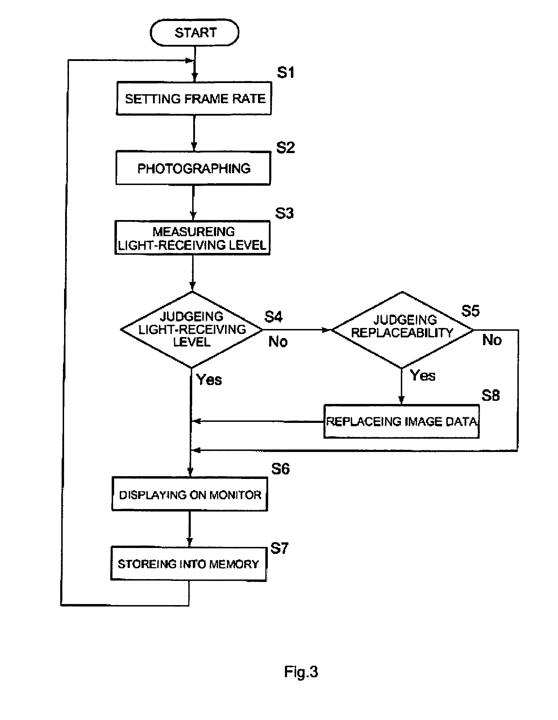

[FIG. 3] is a flowchart illustrating an operation of the camera apparatus of FIG. 1.

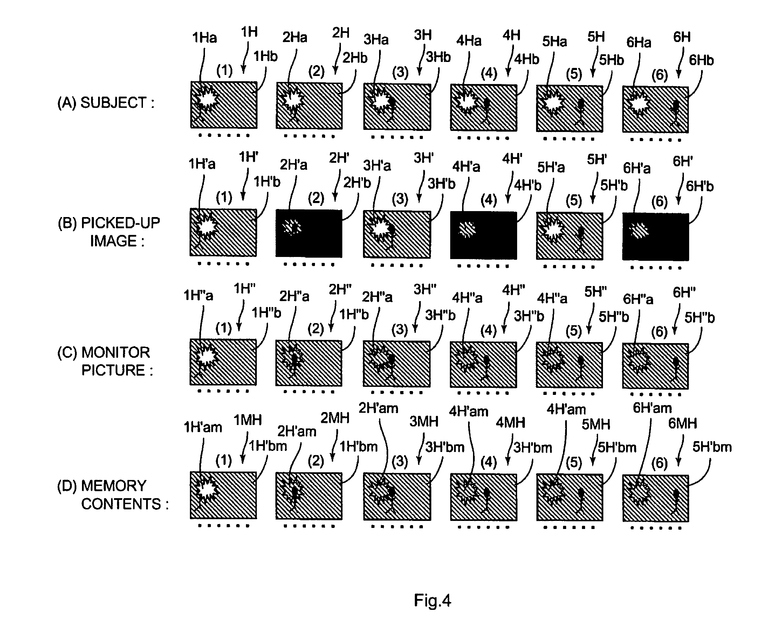

[FIGS. 4] are diagrams illustrating a case of photographing a subject having a high luminance part with the camera apparatus of FIG. 1, in which: part (A) is diagrams illustrating the subject having the high luminance part; part (B) is diagrams illustrating picked-up images obtained by photographing the subject illustrated in part (A); part (C) is diagrams illustrating monitor pictures based on image data obtained by performing a replacement processing for image data on the picked-up images illustrated in part (B); and part (D) is diagrams illustrating contents of image data stored in a memory and used for the replacement processing for the image data.

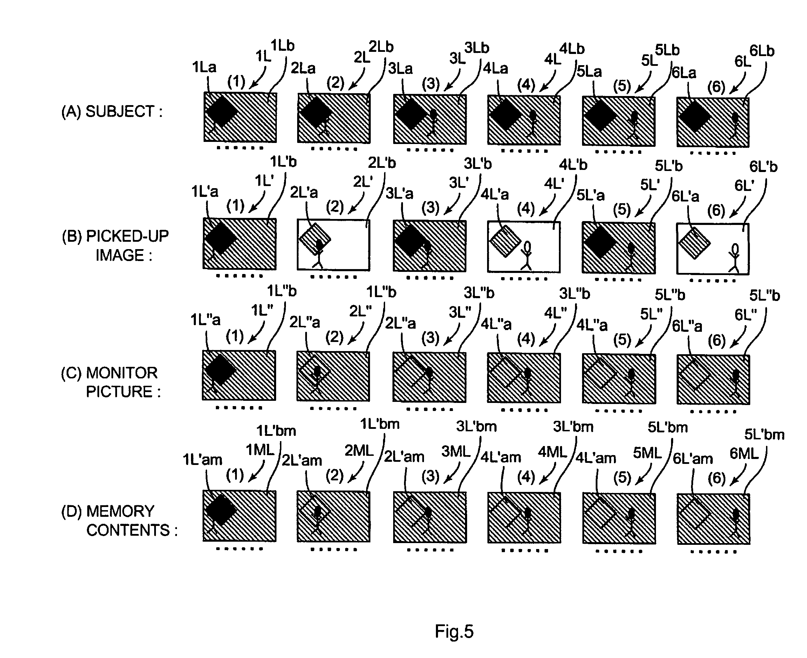

[FIGS. 5] are diagrams illustrating a case of photographing a subject having a low luminance part with the camera apparatus of FIG. 1, in which: part (A) is diagrams illustrating the subject having the low luminance part; part (B) is diagrams illustrating picked-up images obtained by photographing the subject illustrated in part (A); part (C) is diagrams illustrating monitor pictures based on image data obtained by performing the replacement processing for image data on the picked-up images illustrated in part (B); and part (D) is diagrams illustrating contents of image data stored in the memory and used for the replacement processing for the image data.

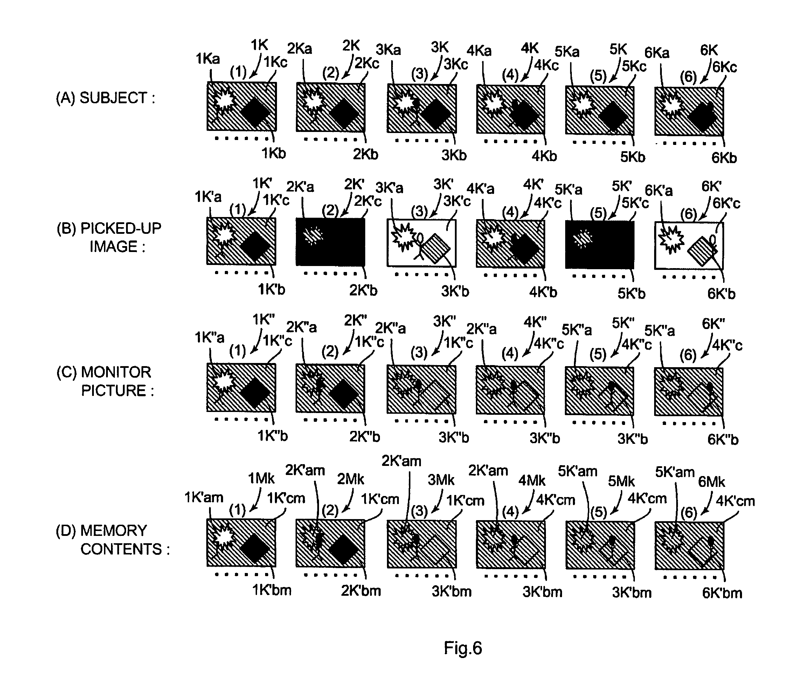

[FIGS. 6] are diagrams illustrating a case of photographing a subject having a high luminance part and a low luminance part with the camera apparatus of FIG. 1, in which: part (A) is diagrams illustrating the subject having the high luminance part and the low luminance part; part (B) is diagrams illustrating picked-up images obtained by photographing the subject illustrated in part (A); part (C) is diagrams illustrating monitor pictures based on image data obtained by performing the replacement processing for image data on the picked-up images illustrated in part (B); and part (D) is diagrams illustrating contents of image data stored in the memory and used for the replacement processing for the image data.

### Description of Reference Numerals

100 ... camera apparatus
121 ... photographic lens
130 ... image-pickup element (image-pickup means)
140 ... circuit device (image processing control means)
143a ... frame rate setting section (exposure time changing means)
143b ... light-receiving level measuring section (light-receiving level measuring means)
143c ... light-receiving level judging section (light-receiving level judging means)
143e ... image replacing section (image replacing means)

### Best Mode for carrying out the Invention

Description is made of a camera apparatus 100 according to an embodiment of the present invention by referring to FIGS. 1 to 6. The camera apparatus 100 can be used as a monitor camera for a household or for an office, and can also be used as a camera apparatus for photographing a scene of a conference or photographing for product inspection. Note that an image processing method is described along with an operation of the camera apparatus 100.

FIG. 1 illustrates a structure of an external appearance of the camera apparatus 100 according to the embodiment of the present invention. The camera section 100 includes an external casing 110 illustrated by the dotted lines of FIG. 1, an optical system 120, an image-pickup element 130 serving as image-pickup means, and a circuit device 140. The external casing 110 has a small shape exhibiting substantially a rectangular parallelepiped of 3 cm in all directions. The optical system 120 has a photographic lens 121 and a lens-barrel 122.

The optical system 120 has the lens-barrel 122 received inside the external casing 110, and has the photographic lens 121 exposed to an outside of the external casing 110. The photographic lens 121 is a so-called wide-angle lens having such an optical characteristic as a wide angle of view of 180 degrees. On a front surface being a side from which light from a subject is incident, the photographic lens 121 exhibits a bulge approximately the same as that of an ordinary convex lens, which is close to a flat plane. However, glass inside a lens is elaborately processed to provide an angle of view of 180 degrees, and can photograph over an entire perimeter about an optical axis, namely, a 360-degree perimeter.

An image-pickup element 130 serving as image-pickup means is disposed at an imaging position of the photographic lens 221. For example, a complementary metal oxide semiconductor (CMOS) sensor is used as the image-pickup element 130. Instead of the CMOS sensor, a charge coupled device (CCD) sensor or other such photoelectric conversion element may be used.

The lens-barrel 122 is equipped with a focusing knob 123. The lens-barrel 122 is structured to move back and forth along the optical axis with respect to the image-pickup element 130 when the focusing knob 123 is held by fingers of a hand to be rotated about the optical axis. Therefore, the focusing knob 123 makes it possible to adjust a position for the optical axis of the photographic lens 121 so that the imaging position of the photographic lens 121 falls on an image-pickup surface of the image-pickup element 130.

In this embodiment, a size of an image-pickup surface of the image-pickup element 130 and a layout of the photographic lens 121 and the image-pickup element 130 are set in such a manner that an entirety of an image obtained by imaging light coming through the photographic lens 121 is included within the image-pickup surface of the image-pickup element 130. Therefore, on the image-pickup surface of the image-pickup element 130, a circular image is formed by the imaging in correspondence with a shape of the photographic lens 121.

Further, the camera apparatus 100 includes a microphone 101, a universal serial bus (USB) connection section 102 to which a USB cable serving as communication means is connected, and an AV signal outputting section 103 for outputting an audio signal and a video signal. The microphone 101 captures a sound in a place within a range being photographed.

FIG. 2 is a block diagram illustrating a configuration of the camera apparatus 100 of according to the embodiment of the present invention. A picked-up image obtained by photographing through the photographic lens 121 and subj ected to an image processing by the circuit device 140 is displayed on a monitor 150 configured by a liquid crystal television set or the like.

The monitor 150 is connected to the camera apparatus 100 through a network via the USB cable (not shown) connected to the USB connection section 102 of the camera apparatus 100, or in a direct manner.

Light from the subject transmitted through the photographic lens 121 is imaged on the image-pickup surface of the image-pickup element 130, and an image signal based on an image obtained by the imaging is output from the image-pickup element 130. The image signal output from the image-pickup element 130 is input to the circuit device 140. The circuit device 140 includes an image signal processing section 141, an image compression processing section 142, a control section 143, a memory 144 provided to the control section 143, a coordinate converting section 145, and a memory 146 provided to the coordinate converting section 145, which serve as image processing control means.

The image signal output from the image-pickup element 130 is input to the image signal processing section 141. In the image signal processing section 141, the image signal output from the image-pickup element 130 is subjected to a predetermined image processing such as a color processing.

In the image compression processing section 142, image data on the image signal that has been subjected to the image processing in the image signal processing section 141 is subjected to a compression processing to generate compressed image data in which a data amount of the image data is reduced. The compression processing for the image data is performed by adopting for example, joint photographic experts group (JPEG).

The control section 143 is configured by, for example, a central processing unit (CPU), and administers control on the operation of the camera apparatus 100 including a generation processing for a picture which is being obtained through the photographic lens 121 and which is to be displayed on the monitor 150. The control section 143 includes a frame rate setting section 143a, a light-receiving level measuring section 143b, a light-receiving level judging sect ion 143c, a replaceability judging section 143d, and an image replacing section 143e.

The memory 144 not only contains a program for the generation processing for a picked-up image which is obtained through the photographic lens 121 and which is to be displayed on the monitor 150 and a program for operating each section of the camera apparatus 100, but also is provided with a work memory for executing the programs. The image signal processing section 141 and the image compression processing section 142 also make use of the memory 144 for their processings.

The coordinate converting section 145 performs the image processing for generating a picture corresponding to each display mode based on the image data obtained from the image compression processing section 142 together with the control section 143. The coordinate converting section 145 has a function of converting a coordinate position of an image picked up on the image-pickup surface of the image-pickup element 130 into a coordinate position of a picture on the monitor 150 when the image picked up on the image-pickup surface of the image-pickup element 130 is to be subjected to the image processing so as to become a picture displayed in each display mode and is to be displayed on the monitor 150. The memory 146 is a work memory used for performing the image processing by using the coordinate converting section 145.

The camera apparatus 100 shown in this embodiment continuously photographs a subject, and outputs a picked-up image obtained by the photographing to the monitor 150. Accordingly, it is possible to observe a situation of the subject by the picture displayed on the monitor 150. Note that in this case, the continuous photographing includes not only performing the photographing several frames to several tens of frames per second in the same manner as a so-called video photographing, but also performing the photographing one frame every several seconds or one frame every several tens of seconds. In other words, the photographing does not include a photographic state in which the photographing is performed with only several frames with no more photographing performed afterward.

In addition, as described below, the camera apparatus 100 is configured to have a frame rate for the continuous photographing changed at a predetermined timing. If there is a picked-up image having a white void or a black solid among a plurality of picked-up images thus obtained by the continuous photographing, the part of the white void or the black solid of the picked-up image is replaced by an image of a part of another picked-up image which corresponds to the part of the white void or the black solid and in which neither a white void nor a black solid is generated. In this way, even when a white void or a black solid is generated in a picked-up image, the content of the part (part of the white void or the black solid) can be checked.

By referring to the block diagram of FIG. 2, a flowchart of FIG. 3, and FIGS. 4, description is made of the operation of the camera apparatus 100. FIG. 4(A) is diagrams illustrating a subject photographed by the camera apparatus 100. It is assumed that time elapses from left to right in an order from part (1) to part (6), in which the subjects at corresponding time instants are denoted by reference symbols 1H, 2H, 3H, 4H, 5H, and 6H, respectively. Herein, the camera apparatus 100 is used to photograph an inside of a room, and the respective subjects 1H, 2H,... include high luminance parts 1Ha, 2Ha, 3Ha, 4Ha, 5Ha, and 6Ha exhibiting a high luminance due to an electric light inside the room and indoor parts 1Hb, 2Hb, 3Hb, 4Hb, 5Hb, and 6Hb, respectively, other than the high luminance parts.

FIG. 4(B) illustrates respective picked-up images obtained by continuously photographing the subjects 1H, 2H,... illustrated in part (A), in a time sequence from left to right. Images of the subjects 1H, 2H, 3H, 4H, 5H, and 6H are picked up as picked-up images 1H', 2H', 3H', 4H', 5H', and 6H' , respectively.

FIG. 4 (C) is diagrams illustrating displayed contents of monitor pictures that are displayed on the monitor 150 based on image data obtained by performing a replacement processing for image data on the picked-up images illustrated in part (B). Displayed on the monitor 150 in correspondence with the picked-up images 1H' , 2H', 3H', 4H', 5H', and 6H' are monitor pictures 1H", 2H", 3H", 4H", 5H", and 6H", respectively.

FIG. 4(D) is diagrams illustrating contents of image data on picked-up images recorded in the memory 144 to be used for the above-mentioned replacement processing for the image data. Image data based on which monitor pictures are displayed on the monitor 150 is recorded in the memory 144 as the image data used for the replacement processing for the image data.

Image data based on which the monitor pictures 1H", 2H", 3H", 4H", 5H", and 6H" are displayed is recorded into the memory 144 as image data 1MH, 2MH, 3MH, 4MH, 5MH, and 6MH, respectively.

First, prior to a start of the photographing, the frame rate is set to a standard frame rate by the frame rate setting section 143a serving as exposure time changing means (Step S1). The standard frame rate is a frame rate that is previously determined according to a subject to be photographed. In general, in a case where the luminance of the subject is expected to be high (bright), the frame rate is set to a large value so as to shorten an exposure time per frame for a pixel of the image-pickup element 130, in order to keep a charge storage amount for the pixel from becoming saturated. In contrast, in a case where the luminance of the subject is expected to be low (dark), the frame rate is set to a small value so as to lengthen the exposure time per frame for a pixel of the image-pickup element 130, thereby increasing the charge storage amount for the pixel. The frame rate is determined relative to the brightness of the subject and the diaphragm diameter of the optical system 120.

Herein, on the assumption that there is no significant change due to the elapsed time in the brightness of the inside of the room corresponding to the subjects 1H to 6H, the standard frame rate is set to, for example, 20 frames/sec so that the picked-up images corresponding to the indoor parts 1Hb to 6Hb are obtained with a proper light-receiving amount. Note that the proper light-receiving amount is such a light-receiving amount as to prevent a white void or a black solid from being generated in a picked-up image.

When the subject 1H illustrated in part (1) of FIG. 4 (A) is photographed at the above-mentioned standard frame rate (Step S2), the picked-up image 1H' illustrated in part (1) of FIG. 4(B) is formed on an image-pickup surface of the image-pickup element 130. The picked-up image 1H' includes a picked-up image 1H'a of a high luminance part 1Ha and a picked-up image 1H'b of the indoor part 1Hb.

Since the frame rate is set in accordance with the luminance of the indoor part 1Hb, the picked-up image 1H'a results in overexposure, being picked up with a white void. In other words, a pixel of a part corresponding to the picked-up image 1H'a among pixels of the image-pickup element 130 has the charge storage amount saturated. On the other hand, since the frame rate is set in accordance with the luminance of the indoor part 1Hb, the picked-up image 1H'b becomes a picked-up image in which the charge storage amount of the image-pickup element 130 is proper, and is picked up in a state where a situation of the indoor part 1Hb is recognized.

Subsequently, with regard to the picked-up image 1H', a light-receiving level of a pixel of the image-pickup element 130 is measured on a pixel basis by the light-receiving level measuring 143b serving as light-receiving level measuring means (Step S3). Then, it is judged by the light-receiving level judging section 143c serving as light-receiving level judging means whether or not each pixel of the picked-up image 1H' has a light-receiving level within a predetermined light-receiving level (Step S4).

The upper limit of the predetermined light-receiving level is judged by taking a reference as to whether or not the pixel of the image-pickup element 130 has the charge storage amount saturated enough to generate a white void in the picked-up image 1H'. The lower limit is judged by taking a reference as to whether or not the pixel of the image-pickup element 130 has the charge storage amount low enough to generate a black solid in the picked-up image 1H'.

With regard to the picked-up image 1H', the part of the picked-up image 1H'b is judged as having a proper light-receiving level, but the part of the picked-up image 1H'a is judged as having the charge storage amount of the pixel saturated. In other words, in the light-receiving level judging (Step S4), the pixel of the picked-up image 1H'a is judged as a pixel whose light-receiving level is without the predetermined light-receiving level (No in Step S4).

If a pixel whose light-receiving level is not within the predetermined light-receiving level exists in the picked-up image 1H', it is judged by the replaceability judging section 143d whether or not pixels of the picked-up image picked up before the picked-up image 1H' include a pixel whose light-receiving level is within the predetermined light-receiving level and which is a pixel located in a position corresponding to the pixel whose light-receiving level is not the predetermined light-receiving level (Step S5). In other words, it is judged whether or not the picked-up image obtained by photographing before the picked-up image 1H' contains a pixel whose light-receiving level is within the predetermined light-receiving level and which is a pixel located in a position corresponding to the picked-up image 1H'a (Step S5).

Herein, since the picked-up image 1H' is a picked-up image picked up first, it is judged that there exists no such pixel (No in Step S5), as illustrated in part (1) of FIG. 4(C), the monitor picture 1H" based on the image data on the picked-up image 1H' is displayed on the monitor 150 (Step S6). The monitor picture 1H" has the part of the picked-up image 1H' displayed as a white void picture 1H"a exhibiting a white void. Therefore, a situation of the high luminance part 1Ha of the subject 1H cannot be observed by the monitor picture 1H".

Since the image pickup is performed at the frame rate suitable for the brightness of the indoor part 1Hb, the part of the picked-up image 1H'b is displayed as a proper picture 1H"b. Therefore, a situation of the indoor part 1Hb can be observed by the proper picture 1H"b.

After the monitor picture 1H" is displayed on the monitor 150 as described above, the image data based on which the monitor picture 1H" is displayed, is stored into the memory 144 as the image data 1MH as illustrated in part (1) of FIG. 4(D) (Step S7). Herein, the monitor picture 1H" is based on the image data on the picked-up image 1H', namely, the picked-up images 1H'a and 1H'b. Therefore, the contents of the image data 1MH are image data 1H'am, which is the image data on the picked-up image 1H'a, and image data 1H'bm, which is the image data on the picked-up image 1H'b.

Subsequently, the procedure shifts to the photographing of the second frame for photographing the subject 2H illustrated in part (2) of FIG. 4(A). In this photographing, the frame rate is set to 40 frames/sec (Step S1). The setting of the frame rate is performed based on a result of measuring the light-receiving level of the picked-up image 1H' picked up at the last time (for the first frame) (Step S3), and the exposure time is set to be short so as to prevent a white void frombeing generated in the high luminance part 2Ha picked up as the picked-up image 2H'a exhibiting a white void in the last photographing.

When the subject 2H is photographed at the frame rate to 40 frames/sec (Step S2), the picked-up image 2H' illustrated in part (2) of FIG. 4(B) is formed on the image-pickup surface of the image-pickup element 130. The frame rate for this photographing (of the second frame) is set so that the picked-up image of the high luminance part 2Ha is picked up while being exposed properly. Therefore, a picked-up image 2Ha' of the picked-up image 2H' corresponds to a part corresponding to the picked-up image 1H'a of the picked-up image 1H', but in the photographing of the second frame, becomes the picked-up image in which the charge storage amount of the image-pickup element 130 is proper. In other words, the picked-up image 1H'a exhibiting a white void in the picked-up image 1H' picked up at the last time (for the first frame) is picked up as the picked-up image 2H'a being proper.

On the other hand, a picked-up image 2H' b of the picked-up image 2H' corresponds to a part corresponding to the picked-up image 1H'b of the picked-up image 1H', but in the photographing of the second frame, is picked up as a picked-up image in which the charge storage amount of the image-pickup element 130 is insufficient enough to exhibit a black solid. In other words, since the frame rate is 40 frames/sec, the part of the picked-up image 1H'b results in underexposure, becoming a picked-up image having such a small charge storage amount as to exhibit a black solid. The light-receiving level of the picked-up image 2H' is measured (Step S3), and it is judged whether or not each pixel of the picked-up image 2H' has a light-receiving level within the predetermined light-receiving level (Step S4).

In the picked-up image 2H', as described above, the part of the picked-up image 2H'b is a picked-up image exhibiting a black solid. Therefore, in the light-receiving level judging (Step S4), the pixel of the picked-up image 2H'b is judged as being a pixel outside the predetermined light-receiving level (No in Step S4).

Then, it is judged by referring to the image data stored in the memory 144 whether or not the picked-up image picked up before the picked-up image 2H' contains a pixel whose light-receiving level is within the predetermined light-receiving level and which is a pixel located in a position corresponding to the picked-up image 2H'b (Step S5).

Herein, the image data 1H'bm on the picked-up image 1H'b which is stored in the memory 144 is judged as being data satisfying conditions (Yes in Step S5). According to the judgment, by the image replacing section 143e serving as image replacing means, image data corresponding to the picked-up image 2H'b is replaced by the image data 1H'bm among the image data on the picked-up image 2H' (Step S8).

Then, as illustrated in part (2) of FIG. 4 (C), the monitor picture 2H" based on the image data on the picked-up image 2H' in which the image data on the picked-up image 2H'b is replaced by the image data 1H'bm is displayed on the monitor 150 (Step S6). In other words, in a part of the monitor picture 2H" corresponding to the picked-up image 2H'b, the proper picture 1H"b based on the image data 1H'bm is displayed.

Displayed in a part of the monitor picture 2H" corresponding to the picked-up image 2H'a is a proper picture 2H"a being a picture based on image data on the picked-up image 2H'a. Therefore, as a whole, the monitor picture 2H" being proper without a white void or a black solid is displayed on the monitor 150. Note that in FIG. 4, a person makes a move to a different position between parts (1) and (2), but in actuality, there is as short a time interval as below 0.1 seconds between parts (1) and (2). Therefore, a position of a moving object such as the person is substantially the same both in parts (1) and (2). Accordingly, even when the image data 1H'bm stored in the memory 144 is used, the monitor picture 2H" causes no unusual feeling. Note that there is as short a time interval as below 0.1 seconds also between other frames or between frames in FIGS. 5 and 6 described later, and the move of the person or the like depicted in the figures causes only a slight shift in position.

In the monitor picture 1H" obtained in the last photographing (of the first frame), the picture of the high luminance part 1Ha becomes the white void picture 1H"a, and hence the situation of the high luminance part 1Ha cannot be observed on the monitor 150, while in the monitor picture 2H" obtained in the current photographing (of the second frame), the situation can be observed as the proper picture 2H"a. Further, in the current photographing (of the second frame), the picked-up image 2H'b of the indoor part 2Hb other than the high luminance part 2Ha is a picked-up image exhibiting a black solid, but the proper picture 1H"b, which is based on the image data 1H'bm on the picked-up image 1H'b picked up with the proper light-receiving amount in the last photographing (of the first frame), is displayed, which makes it possible to observe the monitor picture 2H" as a proper picture.

The proper picture 1H"b of the monitor picture 2H" is not real-time picture obtained in the current photographing but a picture that quite immediately precedes by one frame. Therefore, there is no significant difference between the actually-photographed contents and the display contents of the monitor picture 2H".

Then, the image data on the picked-up image 1H'b and the picked-up image 2H'a based on which the monitor picture 2H" is displayed is stored into the memory 144 as the image data 2MH (Step S7). The contents of the image data 2MH are image data 1H'bm, which is the image data on the picked-up image 1H'b, and image data 2H'am, which is the image data on the picked-up image 2H'a.

Subsequently, the procedure shifts to the photographing of the third frame for photographing the subject 3H illustrated in part (3) of FIG. 4(A). In this photographing, the frame rate is again set to 20 frames/sec. The setting of the frame rate is performed based on a result of measuring the light-receiving level of the picked-up image 2H' picked up at the last time (for the second frame) (Step S3), and the exposure time is set to prevent a black solid from being generated in the indoor part 3Hb picked up as the picked-up image 2H'b exhibiting a black solid in the last photographing.

When the subject 3H is photographed at the frame rate to 20 frames/sec (Step S2), the picked-up image 3H' illustrated in part (3) of FIG. 4(B) is formed on the image-pickup surface of the image-pickup element 130. The frame rate for this photographing (of the third frame) is set so that the picked-up image of the low luminance part 3Hb is picked up while being exposed properly. Therefore, a picked-up image 3Hb' of the picked-up image 3H' corresponds to a part corresponding to the picked-up image 2Hb' of the picked-up image 2H', but in the photographing of the third frame, becomes the picked-up image in which the charge storage amount of the image-pickup element 130 is proper. In other words, the picked-up image 2H'b exhibit a black solid in the picked-up image 2H' picked up at the last time is picked up as the picked-up image 3H'b being proper.

On the other hand, a picked-up image 3H' a of the picked-up image 3H' corresponds to a part corresponding to the picked-up image 2H'a of the picked-up image 2H', but in the photographing of the third frame, is picked up as a picked-up image in which the charge storage amount of the image-pickup element 130 becomes saturated enough to exhibit a white void. In other words, since the frame rate is 20 frames/sec, the part of the picked-up image 3H'a results in overexposure, becoming a picked-up image having such a small charge storage amount as to exhibit a white void. The luminance level of the picked-up image 3H' is measured (Step S3), and it is judged whether or not each pixel of the picked-up image 3H' has a luminance level within the predetermined light-receiving level (Step S4).

In the picked-up image 3H', as described above, the part of the picked-up image 3H'a is a picked-up image exhibiting a white void. Therefore, in the light-receiving level judging (Step S4), the pixel of the picked-up image 3H'a is judged as being a pixel outside the predetermined light-receiving level (No in Step S4).

Then, it is judged by referring to the image data stored in the memory 144 whether or not the picked-up image picked up before the picked-up image 3H' contains a pixel whose light-receiving level is within the predetermined light-receiving level and which is a pixel located in a position corresponding to the picked-up image 3H'a (Step S5).

Herein, the image data 2H'am on the picked-up image 2H' a which is stored in the memory 144 is judged as being data satisfying conditions (Yes in Step S5). According to the judgment, image data corresponding to the picked-up image 3H'a is replaced by the image data 2H'am among the image data on the picked-up image 3H' (Step S8).

Then, as illustrated in part (3) of FIG. 4 (C), the monitor picture 3H" based on the image data on the picked-up image 3H' in which the image data on the picked-up image 3H'a is replaced by the image data 2H'am is displayed on the monitor 150 (Step S6). In other words, in a part of the monitor picture 3H" corresponding to the picked-up image 3H'a, the proper picture 2H"a based on the image data 2H'am is displayed.

Displayed in a part of the monitor picture 3H" corresponding to the picked-up image 3H' b is a proper picture 3H"b being a picture based on image data on the picked-up image 3H'b. Therefore, as a whole, the monitor picture 3H" being proper without a white void or a black solid is displayed on the monitor 150.

In the current photographing (of the third frame), the picked-up image 3H'a of the high luminance part 3Ha is a picked-up image exhibiting a white void, but the proper picture 2H"a, which is based on the image data 2H' am on the picked-up image 2H'a picked up with the proper light-receiving amount in the last photographing (of the second frame), is displayed, which makes it possible to observe the monitor picture 3H" as a proper picture.

The proper picture 2H"a of the monitor picture 3H" is not real-time picture obtained in the current photographing (of the third frame) but a picture that quite immediately precedes by one frame. Therefore, there is no significant difference between the actually-photographed contents and the display contents of the monitor picture 3H".

Then, the image data on the picked-up image 2H'a and the picked-up image 3H'b based on which the monitor picture 3H" is displayed is stored into the memory 144 as the image data 3MH (Step S7). The contents of the image data 3MH are image data 2H' am, which is the image data on the picked-up image 2H'a, and image data 3H'bm, which is the image data on the picked-up image 3H'b.

Also displayed as the monitor pictures, which are displayed on the monitor 150 in the case of performing the subsequent photographing, namely, photographing the fourth frame, the fifth frame, the sixth frame..., are pictures on which the replacement processing for an image has been performed in the same manner as performed on the above-mentioned first to third frames. Therefore, pictures obtained by photographing the subjects 4H, 5H, 6H,... can be observed on the monitor 150 in a state where there is neither a white void nor a black solid.

The above description of the operation of the camera apparatus 100 is made for the case of photographing the subjects 1H, 2H, ... including the high luminance parts 1Ha, 2Ha, ... in which the luminance is high owing to the electric light or the like inside the room, respectively. Meanwhile, by referring to the blockdiagram of FIG. 2, the flowchart of FIG. 3, and FIGS. 5, description is made of the operation of the camera apparatus 100 performed when subjects 1L, 2L,... including low luminance parts 1La, 2La,..., respectively, such as a shadow part in the shade of furniture or the like in the inside of the room are photographed as illustrated in parts (1) to (6) of FIG. 5(A).

FIG. 5(A) is diagrams illustrating a subject photographed by the camera apparatus 100. As in FIG. 4, it is assumed that time elapses from left to right in an order from part (1) to part (6), in which the subject at corresponding time instants is denoted by reference symbols 1L, 2L, 3L, 4L, 5L, and 6L, respectively. Herein, the camera apparatus 100 is used to photograph an inside of a room, and the respective subjects 1L, 2L, ... include low luminance parts 1La, 2La, 3La, 4La, 5La, and 6La and indoor parts 1Lb, 2Lb, 3Lb, 4Lb, 5Lb, and 6Lb, respectively, other than the high luminance parts.

FIG. 5(B) illustrates respective picked-up images obtained by continuously photographing the subjects 1L, 2L,... illustrated in part (A), in a time sequence from left to right. Images of the subjects 1L, 2L, 3L, 4L, 5L, and 6L are picked up as picked-up images 1L', 2L', 3L', 4L', 5L', and 6L' , respectively.

FIG. 5 (C) is diagrams illustrating displayed contents of monitor pictures that are displayed on the monitor 150 based on image data obtained by performing a replacement processing for image data on the picked-up images illustrated in part (B). Displayed on the monitor 150 in correspondence with the picked-up images 1L' , 2L', 3L', 4L', 5L', and 6L' are monitor pictures 1L", 2L", 3L", 4L", 5L", and 6L", respectively.

FIG. 5(D) is diagrams illustrating contents of image data on picked-up images recorded in the memory 144 to be used for the above-mentioned replacement processing for the image data. Image data based on which monitor pictures are displayed on the monitor 150 is recorded in the memory 144 as the image data used for the replacement processing for the image data.

Image data based on which the monitor pictures 1L", 2L", 3L", 4L", 5L", and 6L" are displayed is recorded into the memory 144 as image data 1ML, 2ML, 3ML, 4ML, 5ML, and 6ML, respectively.

First, prior to a start of the photographing, the frame rate is set to a standard frame rate by the frame rate setting section 143a (Step S1). Herein, on the assumption that there is no significant change due to the elapsed time in the brightness of the inside of the room corresponding to the subjects 1L to 6L, the standard frame rate is set to, for example, 20 frames/sec so that the picked-up images corresponding to the indoor parts 1Lb to 6Lb are obtained with a proper light-receiving amount.

When the subject 1L illustrated in part (1) of FIG. 5 (A) is photographed at the above-mentioned standard frame rate (Step S2), the picked-up image 1L' illustrated in part (1) of FIG. 5(B) is formed on an image-pickup surface of the image-pickup element 130. The picked-up image 1L' includes a picked-up image 1L'a of a low luminance part 1La and a picked-up image 1L'b of the indoor part 1Lb.

Since the frame rate is set in accordance with the luminance of the indoor part 1Lb, the picked-up image 1L'a results in underexposure, being picked up with a black solid. In other words, a pixel of a part corresponding to the picked-up image 1L'a among pixels of the image-pickup element 130 has the charge storage amount insufficient. On the other hand, since the frame rate is set in accordance with the luminance of the indoor part 1Lb, the picked-up image 1L'b becomes a picked-up image in which the charge storage amount of the image-pickup element 130 is proper, and is picked up in a state where a situation of the indoor part 1Lb is recognized.

Subsequently, with regard to the picked-up image 1L', a light-receiving level is measured by the light-receiving level measuring section 143b (Step S3), and it is judged by the light-receiving level judging section 143c whether or not each pixel of the picked-up image 1L' has a light-receiving level within a predetermined light-receiving level (Step S4).

The upper limit of the predetermined light-receiving level is judged by taking a reference as to whether or not the pixel of the image-pickup element 130 has the charge storage amount saturated enough to generate a white void in the picked-up image 1L'. The lower limit is judged by taking a reference as to whether or not the pixel of the image-pickup element 130 has the charge storage amount low enough to generate a black solid in the picked-up image 1L'.

With regard to the picked-up image 1L' , the part of the picked-up image 1L'b is judged as having a proper light-receiving level, but the part of the picked-up image 1L'a is judged as having the charge storage amount of the pixel insufficient. In other words, in the light-receiving level judging (Step S4), the pixel of the picked-up image 1L'a is judged as a pixel whose light-receiving level is without the predetermined light-receiving level (No in Step S4).

Then, it is judged whether or not the picked-up image obtained by photographing before the picked-up image 1L' contains a pixel whose light-receiving level is within the predetermined light-receiving level and which is a pixel located in a position corresponding to the picked-up image 1L'a (Step S5). Herein, since the picked-up image 1L' is a picked-up image picked up first, it is judged that there exists no such pixel (No in Step S5), as illustrated in part (1) of FIG. 5(C), the monitor picture 1L" based on the image data on the picked-up image 1L' is displayed on the monitor 150 (Step S6). The monitor picture 1L" has the part of the picked-up image 1L' displayed as a black solid picture 1L"a exhibiting a black solid. Therefore, a situation of the low luminance part 1La of the subject 1L cannot be observed by the monitor picture 1L".

Since the image pickup is performed at the frame rate suitable for the brightness of the indoor part 1Lb, the part of the picked-up image 1L'b is displayed as a proper picture 1L"b. Therefore, a situation of the indoor part 1Lb can be observed by the proper picture 1L"b.

After the monitor picture 1L" is displayed on the monitor 150 as described above, the image data based on which the monitor picture 1L" is displayed is stored into the memory 144 as the image data 1ML as illustrated in part (1) of FIG. 5(D) (Step S7). Herein, the monitor picture 1L" is based on the image data on the picked-up image 1L', namely, the picked-up images 1L'a and 1L'b. Therefore, the contents of the image data 1ML are image data 1L'am, which is the image data on the picked-up image 1L'a, and image data 1L'bm, which is the image data on the picked-up image 1L'b.

Subsequently, the procedure shifts to the photographing of the second frame for photographing the subject 2L illustrated in part (2) of FIG. 5(A). In this photographing, the frame rate is set to 10 frames/sec (Step S1). The setting of the frame rate is performed based on a result of measuring the light-receiving level of the picked-up image 1L' picked up at the last time (for the first frame) (Step S3), and the exposure time is set to be long so as to prevent a black solid frombeing generated in the low luminance part 2La picked up as the picked-up image 1L'a exhibiting a black solid in the last photographing.

When the subject 2L is photographed at the frame rate to 10 frames/sec (Step S2), the picked-up image 2L' illustrated in part (2) of FIG. 5(B) is formed on the image-pickup surface of the image-pickup element 130. The frame rate for this photographing (of the second frame) is set so that the picked-up image of the low luminance part 2La is picked up while being exposed properly. Therefore, a picked-up image 2La' of the picked-up image 2L' corresponds to a part corresponding to the picked-up image 1L'a of the picked-up image 1L', but in the photographing of the second frame, becomes the picked-up image in which the charge storage amount of the image-pickup element 130 is proper. In other words, the picked-up image 1L'a exhibiting a black solid in the picked-up image 1L' picked up at the last time (for the first frame) is picked up as the picked-up image 2L'a being proper.

On the other hand, a picked-up image 2L' b of the picked-up image 2L' corresponds to a part corresponding to the picked-up image 1L'b of the picked-up image 1L', but in the photographing of the second frame, is picked up as a picked-up image in which the charge storage amount of the image-pickup element 130 becomes saturated enough to exhibit a white void. In other words, since the frame rate is 10 frames/sec, the part of the picked-up image 2L'b results in overexposure, becoming a picked-up image having such a charge storage amount as to exhibit a white void.

The light-receiving level of the picked-up image 2L' is measured (Step S3), and it is judged whether or not each pixel of the picked-up image 2L' has a light-receiving level within the predetermined light-receiving level (Step S4). In the picked-up image 2L', as described above, the part of the picked-up image 2L'b is a picked-up image exhibiting a white void. Therefore, in the light-receiving level judging (Step S4), the pixel of the picked-up image 2L'b is judged as being a pixel outside the predetermined light-receiving level (No in Step S4).

Then, it is judged by referring to the image data stored in the memory 144 whether or not the picked-up image picked up before the picked-up image 2L' contains a pixel whose light-receiving level is within the predetermined light-receiving level and which is a pixel located in a position corresponding to the picked-up image 2L'b (Step S5).

Herein, the image data 1L'bm on the picked-up image 1L'b of the picked-up image 1L' is judged as being data satisfying conditions (Yes in Step S5). According to the judgment, by the image replacing section 143e, image data corresponding to the picked-up image 2L'b is replaced by the image data 1L'bm among the image data on the picked-up image 2L' (Step S8).

Then, as illustrated in part (2) of FIG. 5(C), the monitor picture 2L" based on the image data on the picked-up image 2L' in which the image data on the picked-up image 2L'b is replaced by the image data 1L'bm is displayed on the monitor 150 (Step S6). In other words, in a part of the monitor picture 2L" corresponding to the picked-up image 2L'b, the proper picture 1L"b based on the image data 1L'bm is displayed.

Displayed in a part of the monitor picture 2L" corresponding to the picked-up image 2L'a is a proper picture 2L"a being a picture based on image data on the picked-up image 2L'a. Therefore, as a whole, the monitor picture 2L" being proper without a white void or a black solid is displayed on the monitor 150.

In the monitor picture 1L" obtained in the last photographing (of the first frame), the picture of the low luminance part 1La becomes the black solid picture 1L"a, and hence the situation of the low luminance part 1La cannot be observed on the monitor 150, while in the monitor picture 2L" obtained in the current photographing (of the second frame), the situation can be observed as the proper picture 2L"a. Further, in the current photographing (of the second frame), the picked-up image 2L'b of the indoor part 2Lb other than the low luminance part 2La is a picked-up image exhibiting a white void, but the proper picture 1L"b, which is based on the image data 1L'bm on the picked-up image 1L'b picked up with the proper light-receiving amount in the last photographing (of the first frame), is displayed, which makes it possible to observe the monitor picture 2L" as a proper picture.

The proper picture 1L"b of the monitor picture 2L" is not real-time picture obtained in the current photographing but a picture that quite immediately precedes by one frame. Therefore, there is no significant difference between the actually-photographed contents and the display contents of the monitor picture 2L".

Then, the image data on the picked-up image 1L'b and the picked-up image 2L'a based on which the monitor picture 2L" is displayed is stored into the memory 144 as the image data 2ML (Step S7). The contents of the image data 2ML are image data 1L'bm, which is the image data on the picked-up image 1L'b, and image data 2L'am, which is the image data on the picked-up image 2L'a.

Subsequently, the procedure shifts to the photographing of the third frame for photographing the subject 3L illustrated in part (3) of FIG. 5(A). In this photographing, the frame rate is again set to 20 frames/sec. The setting of the frame rate is performed based on a result of measuring the light-receiving level of the picked-up image 2L' picked up at the last time (for the second frame) (Step S3), and the exposure time is set so as to prevent a white void from being generated in the indoor part 3Lb picked up as the picked-up image 2L'b exhibiting a white void in the last photographing.

When the subject 3L is photographed at the frame rate to 20 frames/sec (Step S2), the picked-up image 3L' illustrated in part (3) of FIG. 5(B) is formed on the image-pickup surface of the image-pickup element 130. The frame rate for this photographing (of the third frame) is set so that the picked-up image of the indoor part 3Lb is picked up while being exposed properly. Therefore, a picked-up image 3Lb' of the picked-up image 3L' corresponds to a part corresponding to the picked-up image 2L'b of the picked-up image 2L', but in the photographing of the third frame, becomes the picked-up image in which the charge storage amount of the image-pickup element 130 is proper. In other words, the picked-up image 2L'b exhibiting a white void in the picked-up image 2L' picked up at the last time (for the second frame) is picked up as the picked-up image 3L'b being proper.

On the other hand, a picked-up image 3L' a of the picked-up image 3L' corresponds to a part corresponding to the picked-up image 2L'a of the picked-up image 2L', but in the photographing of the third frame, is picked up as a picked-up image in which the charge storage amount of the image-pickup element 130 is insufficient enough to exhibit a black solid. In other words, since the frame rate is 20 frames/sec, the part of the picked-up image 3L'a results in underexposure, becoming a picked-up image having such an insufficient charge storage amount as to exhibit a black solid. The luminance level of the picked-up image 3L' is measured (Step S3), and it is judged whether or not each pixel of the picked-up image 3L' has a light-receiving level within the predetermined light-receiving level (Step S4).

In the picked-up image 3L', as described above, the part of the picked-up image 3L'a is a picked-up image exhibiting a black solid. Therefore, in the light-receiving level judging (Step S4), the pixel of the picked-up image 3L'a is judged as being a pixel outside the predetermined light-receiving level (No in Step S4).

Then, it is judged by referring to the image data stored in the memory 144 whether or not the picked-up image picked up before the picked-up image 3L' contains a pixel whose light-receiving level is within the predetermined light-receiving level and which is a pixel located in a position corresponding to the picked-up image 3L'a (Step S5).

Herein, the image data 2L'am on the picked-up image 2L'a of the picked-up image 2L' is judged as being data satisfying conditions (Yes in Step S5). According to the judgment, image data corresponding to the picked-up image 3L' a is replaced by the image data 2L'am among the image data on the picked-up image 3L' (Step S8).

Then, as illustrated in part (3) of FIG. 5(C), the monitor picture 3L" based on the image data on the picked-up image 3L' in which the image data on the picked-up image 3L'a is replaced by the image data 2L'am is displayed on the monitor 150 (Step S6). In other words, in a part of the monitor picture 3L" corresponding to the picked-up image 3L'a, the proper picture 2L"a based on the image data 2L'am is displayed.

Displayed in a part of the monitor picture 3L" corresponding to the picked-up image 3L'b is a proper picture 3L"b being a picture based on image data on the picked-up image 3L'b. Therefore, as a whole, the monitor picture 3L" being proper without a white void or a black solid is displayed on the monitor 150.

In the current photographing (of the third frame), the picked-up image 3L'a of the low luminance part 3La is a picked-up image exhibiting a black solid, but the proper picture 2L"a, which is based on the image data 2L'am on the picked-up image 2L'a picked up with the proper light-receiving amount in the last photographing (of the second frame), is displayed, which makes it possible to observe the monitor picture 3L" as a proper picture.

The proper picture 2L"a of the monitor picture 3L" is not real-time picture obtained in the current photographing (of the third frame) but a picture that quite immediately precedes by one frame. Therefore, there is no significant difference between the actually-photographed contents and the display contents of the monitor picture 3L".

Then, the image data on the picked-up image 2L'a and the picked-up image 3L'b based on which the monitor picture 3L" is displayed is stored into the memory 144 as the image data 3ML (Step S7). The contents of the image data 3ML are image data 2L' am, which is the image data on the picked-up image 2L' a, and image data 3L'bm, which is the image data on the picked-up image 3L'b.

Also displayed as the monitor pictures, which are displayed on the monitor 150 in the case of performing the subsequent photographing, namely, photographing the fourth frame, the fifth frame, the sixth frame..., are pictures on which the replacement processing for an image has been performed in the same manner as performed on the above-mentioned first to third frames. Therefore, pictures obtained by photographing the subjects 4L, 5L, 6L,... can be observed on the monitor 150 in a state where there is neither a white void nor a black solid.

Next, by referring to the block diagram of FIG. 2, the flowchart of FIG. 3, and FIGS. 6, description is made of the operation of the camera apparatus 100 performed when subjects including the high luminance parts exhibiting a high luminance due to the electric light or the like and the low luminance parts such as the shadow part in the shade of furniture or the like in the inside of the room.

FIG. 6(A) is diagrams illustrating a subject photographed by the camera apparatus 100. As in FIG. 4(A), it is assumed that time elapses from left to right in an order from part (1) to part (6), in which the subject at corresponding time instants is denoted by reference symbols 1K, 2K, 3K, 4K, 5K, and 6K, respectively. Herein, the camera apparatus 100 is used to photograph an inside of a room, and the respective subjects 1K, 2K,... include high luminance parts 1Ka, 2Ka, 3Ka, 4Ka, 5Ka, and 6Ka, low luminance parts 1Kb, 2Kb, 3Kb, 4Kb, 5Kb, and 6Kb, and indoor parts 1Kc, 2Kc, 3Kc, 4Kc, 5Kc, and 6Kc, respectively, other than the high luminance parts and the low luminance parts.

FIG. 6(B) illustrates respective picked-up images obtained by continuously photographing the subjects 1K, 2K,... illustrated in part (A), in a time sequence from left to right. Images of the subjects 1K, 2K, 3K, 4K, 5K, and 6K are picked up as picked-up images 1K', 2K', 3K', 4K', 5K' , and 6K' , respectively.

FIG. 6 (C) is diagrams illustrating displayed contents of monitor pictures that are displayed on the monitor 150 based on image data obtained by performing a replacement processing for image data on the picked-up images illustrated in part (B). Displayed on the monitor 150 in correspondence with the picked-up images 1K' , 2K', 3K', 4K', 5K', and 6K' are monitor pictures 1K", 2K", 3K", 4K", 5K", and 6K", respectively.

FIG. 6(D) is diagrams illustrating contents of image data on picked-up images recorded in the memory 144 to be used for the above-mentioned replacement processing for the image data. Image data based on which monitor pictures are displayed on the monitor 150 is recorded in the memory 144 as the image data used for the replacement processing for the image data.

Image data based on which the monitor pictures 1K", 2K", 3K", 4K", 5K", and 6K" are displayed is recorded into the memory 144 as image data 1Mk, 2Mk, 3Mk, 4Mk, 5Mk, and 6Mk, respectively.

First, prior to a start of the photographing, the frame rate is set to a standard frame rate by the frame rate setting section 143a (Step S1). Herein, on the assumption that there is no significant change due to the elapsed time in the brightness of the inside of the room corresponding to the subjects 1K to 6K, the standard frame rate is set to, for example, 20 frames/sec so that the picked-up images corresponding to the indoor parts 1Kc to 6Kc are obtained with a proper light-receiving amount.

When the subject 1K illustrated in part (1) of FIG. 6 (A) is photographed at the above-mentioned standard frame rate (Step S2), the picked-up image 1K' illustrated in part (1) of FIG. 6(B) is formed on an image-pickup surface of the image-pickup element 130. The picked-up image 1K' includes a picked-up image 1K'a of a high luminance part 1Ka, a picked-up image 1K'b of the low luminance part 1Kb, and a picked-up image 1K'c of the indoor part 1Kc. Since the frame rate is set in accordance with the luminance of the indoor part 1Kc, the picked-up image 1K'a results in overexposure, being picked up with a white void. In other words, a pixel of a part corresponding to the picked-up image 1K'a among pixels of the image-pickup element 130 has the charge storage amount saturated.

In contrast, the picked-up image 1K'b results in underexposure, being picked up with a black solid. In other words, a pixel of a part corresponding to the picked-up image 1K'b among pixels of the image-pickup element 130 has the charge storage amount insufficient. On the other hand, since the frame rate is set in accordance with the luminance of the indoor part 1Kc, the picked-up image 1K'c becomes a picked-up image in which the charge storage amount of the image-pickup element 130 is proper, and is picked up in a state where a situation of the indoor part 1Kc is recognized.

Subsequently, with regard to the picked-up image 1K', the light-receiving level is measured by the light-receiving level measuring section 143b (Step S3), and it is judged by the light-receiving level judging section 143c whether or not each pixel of the picked-up image 1K' has a light-receiving level within a predetermined light-receiving level (Step S4). The upper limit of the predetermined light-receiving level is judged based on whether or not the pixel of the image-pickup element 130 has the charge storage amount saturated enough to generate a white void in the picked-up image 1K'. The lower limit is judged based on whether or not the pixel of the image-pickup element 130 has the charge storage amount low enough to generate a black solid in the picked-up image 1K'. With regard to the picked-up image 1K', the part of the picked-up image 1K'c is judged as having a proper light-receiving level.

In contrast, the part of the picked-up image 1K'a is judged as having the charge storage amount of the pixel saturated, and the part of the picked-up image 1K'b is judged as having the charge storage amount of the pixel insufficient. In other words, in the light-receiving level judging (Step S4), the picked-up image 1K' is judged as containing a pixel whose light-receiving level is without the predetermined light-receiving level (No in Step S4).

Then, it is judged whether or not the picked-up image obtained by photographing before the picked-up image 1K' contains a pixel whose light-receiving level is within the predetermined light-receiving level and which is a pixel located in a position corresponding to the picked-up image 1K'a or the picked-up image 1K'b (Step S5). Herein, since the picked-up image 1K' is a picked-up image picked up first, it is judged that there exists no such pixel (No in Step S5), as illustrated in part (1) of FIG. 6(C), the monitor picture 1K" based on the image data on the picked-up image 1K' is displayed on the monitor 150 (Step S6). The monitor picture 1K" has the part of the picked-up image 1K' displayed as a white void picture 1K"a exhibiting a white void. Therefore, a situation of the high luminance part 1Ka of the subject 1K cannot be observed by the monitor picture 1K".

Further, the part of the picked-up image 1K'b is displayed as a black solid picture 1K"b exhibiting a black solid. Therefore, a situation of the low luminance part 1Kb of the subject 1K cannot be observed by the monitor picture 1K".

Since the image pickup is performed at the frame rate suitable for the brightness of the indoor part 1Kc, the part of the picked-up image 1K'c is displayed as a proper picture 1K"c. Displayed on the monitor 150 is a situation of the indoor part 1Kc which can be observed by the proper picture 1K"c.

After the monitor picture 1K" is displayed on the monitor 150 as described above, the image data based on which the monitor picture 1K" is displayed is stored into the memory 144 as the image data 1Mk as illustrated in part (1) of FIG. 6 (D) (Step S7). Herein, the monitor picture 1K" is based on the image data on the picked-up image 1K', namely, the picked-up images 1K'a, 1K'b, and 1K'c. Therefore, the contents of the image data 1Mk are 1K'am, which is the image data on the picked-up image 1K'a, 1K'bm, which is the image data on the picked-up image 1K'b, and 1K'cm, which is the image data on the picked-up image 1K'c.

Subsequently, the procedure shifts to the photographing of the second frame for photographing the subject 2K illustrated in part (2) of FIG. 6(A). First, in this photographing, the frame rate is set to 40 frames/sec (Step S1). The setting of the frame rate is performed based on a result of measuring the light-receiving level of the picked-up image 1K' picked up at the last time (for the first frame) (Step S3), and the exposure time is set to be short so as to prevent a white void frombeing generated in the high luminance part 2Ka picked up as the picked-up image 1K'a exhibiting a white void in the last photographing.

When the subject 2K is photographed at the frame rate to 40 frames/sec (Step S2), the picked-up image 2K' illustrated in part (2) of FIG. 6(B) is formed on the image-pickup surface of the image-pickup element 130. The frame rate for this photographing (of the second frame) is set so that the picked-up image of the high luminance part 1Ka is picked up while being exposed properly. Therefore, a picked-up image 2Ka' of the picked-up image 2K' corresponds to a part corresponding to the picked-up image 1K'a of the picked-up image 1K', but in the photographing of the second frame, becomes the picked-up image in which the charge storage amount of the image-pickup element 130 is proper. In other words, the picked-up image 1K'a exhibiting a white void in the picked-up image 1K' picked up at the last time (for the first frame) is picked up as the picked-up image 2K'a being proper.

On the other hand, a picked-up image 2K' b of the picked-up image 2K' corresponds to a part corresponding to the picked-up image 1K'b of the picked-up image 1K', but in the photographing of the second frame, is picked up as a picked-up image in which the charge storage amount of the image-pickup element 130 is insufficient enough to exhibit a black solid. In other words, since the frame rate is 40 frames/sec, the part of the picked-up image 2K'b further results in underexposure, becoming a picked-up image in which the charge storage amount is insufficient enough to exhibit a black solid. Further, a part corresponding to a picked-up image 2K'c results in underexposure, becoming a picked-up image in which the charge storage amount is insufficient enough to exhibit a black solid.

The light-receiving level of the picked-up image 2K' is measured (Step S3), and it is judged whether or not each pixel of the picked-up image 2K' has a light-receiving level within the predetermined light-receiving level (Step S4). In the picked-up image 2K' , as described above, the part of the picked-up image 2K' b and the picked-up image 2K' c is a picked-up image exhibiting a black solid. Therefore, in the light-receiving level judging (Step S4), the pixel of the picked-up image 2K'b and the picked-up image 2K'c is judged as being a pixel outside the predetermined light-receiving level (No in Step S4).

Then, it is judged by referring to the image data stored in the memory 144 whether or not the picked-up image picked up before the picked-up image 2K' contains a pixel whose light-receiving level is within the predetermined light-receiving level and which is a pixel located in a position corresponding to the picked-up image 2K'b and the picked-up image 2K'c (Step S5).

Herein, with regard to the picked-up image 2K'c, the image data 1K'cm on the picked-up image 1K'c of the picked-up image 1K' is judged as being data satisfying conditions (Yes in Step S5). According to the judgment, by the image replacing section 143e, image data corresponding to the picked-up image 2K'c is replaced by the image data 1K'cm among the image data on the picked-up image 2K' (Step S8).

Then, as illustrated in part (2) of FIG. 6(C), themonitor picture 2K" based on the image data on the picked-up image 2K' in which the image data on the picked-up image 2K'c is replaced by the image data 1K'cm is displayed on the monitor 150 (Step S6). In other words, in a part of the monitor picture 2K" corresponding to the picked-up image 2K'c, the proper picture 1K"c based on the image data 1K'cm is displayed.

Displayed in a part of the monitor picture 2K" corresponding to the picked-up image 2K'a is a proper picture 2K"a being a picture based on image data on the picked-up image 2K'a. Further, displayed in a part of the monitor picture 2K" corresponding to the picked-up image 2K'b is a black solid image 2K"b exhibiting a black solid being a picture based on image data on the picked-up image 2K'b.

Thus, in the monitor picture 1K" obtained in the last photographing, the picture of the high luminance part 1Ka becomes the white void picture 1K"a, and hence the situation of the high luminance part 1Ka cannot be observed on the monitor 150, while in the monitor picture 2K" obtained in the current photographing, the situation can be observed as the proper picture 2K"a. The proper picture 2K"c is not real-time picture obtained in the current photographing but a picture that quite immediately precedes by one frame. Therefore, there is no significant difference between the actually-photographed contents and the display contents of the monitor picture 2K".

Then, the image data on the picked-up image 2K'a, the picked-up image 2K'b, and the picked-up image 2K'c based on which the monitor picture 2K" is displayed is stored into the memory 144 as the image data 2Mk (Step S7).

The contents of the image data 2Mk are image data 1K'cm, which is the image data on image data 2K'am, which is the image data on the picked-up image 2K'a, image data 2K'bm, which is the image data on the picked-up image 2K'b, and image data 2K'cm, which is the image data on the picked-up image 2K'c.

Note that the picked-up image 1K'b obtained by photographing the low luminance part 1Kb at the first frame is picked up at a smaller frame rate than the picked-up image 2K'b obtained by photographing the low luminance part 2Kb at the second frame. With regard to the low luminance part, the black solid can be suppressed to a smaller extent by photographing at a smaller frame rate with a longer exposure time. Therefore, the picked-up image 1K'b may have the black solid to a smaller extent than the picked-up image 2K'b. Therefore, a picture based on the image data 1K'bm of the image data 1Mk may be displayed instead of the monitor picture 2K"b of the monitor picture 2K".

In other words, even if it is judged in the above-mentioned Step S5 that the pixel of the picked-up image 1K'b is not a pixel whose light-receiving level is within the predetermined light-receiving level, in a case where more pixels thereof have a light-receiving level within the predetermined light-receiving level than the picked-up image 2K'b, the image data on the picked-up image 2K'b may be replaced by the image data 1K'bm on the picked-up image 1K'b.

Subsequently, the procedure shifts to the photographing of the third frame for photographing the subject 3K illustrated in part (3) of FIG. 6(A). In this photographing, first, the frame rate is set to 10 frames/sec (Step S1).

The setting of the frame rate is performed based on a result of measuring the light-receiving level of the picked-up image 2K' or the picked-up image 1K' picked up at the last time (photographing for the second frame) or the time before last (photographing for the first frame) (Step S3), and the frame rate is set so as to prevent a black solid from being generated in the low luminance part 3Kb picked up as the picked-up image 2K'b and the picked-up image 1K'b exhibiting a black solid in the last or the time before last photographing. Further, when the subject 3K is photographed at the frame rate to 10 frames/sec (Step S2), the picked-up image 3K' illustrated in part (2) of FIG. 6 (B) is formed on the image-pickup surface of the image-pickup element 130.

The frame rate for this photographing (of the third frame) is set so that the picked-up image of the low luminance part 3Kb is picked up while being exposed properly. Therefore, a picked-up image 3Kb' of the picked-up image 3K' corresponds to a part corresponding to the picked-up image 1K'b of the picked-up image 1K' or the picked-up image 2K'b of the picked-up image 2K', but in the photographing of the third frame, becomes the picked-up image in which the charge storage amount of the image-pickup element 130 is proper. In other words, the picked-up image 1K'b or 2K'b exhibiting a black solid in the picked-up image 1K' or 2K' picked in the first frame or the second frame, is picked up as the picked-up image 3K'b being proper.

On the other hand, a picked-up image 3K'a of the picked-up image 3K' corresponds to a part corresponding to the picked-up image 2K'a of the picked-up image 2K', but in the photographing of the third frame, is picked up as a picked-up image in which the charge storage amount of the image-pickup element 130 is saturated enough to exhibit a white void. In other words, since the frame rate is 10 frames/sec, the part of the picked-up image 3K'a results in overexposure, becoming a picked-up image having the charge storage amount saturated enough to exhibit a white void.

Further, a picked-up image 3K'c of the picked-up image 3K' corresponds to a part corresponding to the picked-up image 2K' c of the picked-up image 2K', but in the photographing of the third frame, is picked up as a picked-up image in which the charge storage amount of the image-pickup element 130 is saturated enough to exhibit a white void. In other words, since the frame rate is 10 frames/sec, the part of the picked-up image 3K' c results in overexposure, becoming a picked-up image having the charge storage amount saturated enough to exhibit a white void.

The luminance level of the picked-up image 3K' is measured (Step S3), and it is judged whether or not each pixel of the picked-up image 3K' has a light-receiving level within the predetermined light-receiving level (Step S4).

In the picked-up image 3K', as described above, the parts of the picked-up image 3K' a and the picked-up image 3K' c are picked-up images exhibiting a white solid. Therefore, in the luminance level judging (Step S4), the pixels of the picked-up image 3K'a and the picked-up image 3K'c are judged as each being a pixel outside the predetermined light-receiving level (No in Step S4).

Then, it is judged by referring to the image data stored in the memory 144 whether or not the picked-up image picked up before the picked-up image 3K' contains a pixel whose light-receiving level is within the predetermined light-receiving level and which is a pixel located in a position corresponding to the pixels of the picked-up image 3K' a and the picked-up image 3K'c (Step S5). Herein, the image data 1K'cm on the picked-up image 1K'c of the picked-up image 1K' and the image data 2K'am on the picked-up image 2K'a of the picked-up image 2K' are judged as being data satisfying conditions (Yes in Step S5). According to the judgment, among the image data on the picked-up image 3K' , image data corresponding to the picked-up image 3K'a is replaced by the image data 2K'am, and image data corresponding to the picked-up image 3K' c is replaced by the image data 1K'cm (Step S8).

Then, the monitor picture 3K" based on the image data on the picked-up image 3K' in which the image data on the picked-up image 3K'a and the picked-up image 3K'c are replaced by the image data 2K'am and the image data 1K'cm, respectively, are displayed on the monitor 150 (Step S6). In other words, in a part of the monitor picture 3K" corresponding to the picked-up image 3K'a, the proper picture 2K"a based on the image data 2K'am is displayed. Further, in a part of the monitor picture 3K" corresponding to the picked-up image 1K'c, the proper picture 1K"c based on the image data 2K'cm is displayed.

Displayed in a part of the monitor picture 3K" corresponding to the picked-up image 3K"b is a proper picture 3K"b being a picture based on image data on the picked-up image 3K'b. In the current photographing (of the third frame), the picked-up image 3K'a of the high luminance part 3Ka and the picked-up image 3K'c of the indoor part 3Kc are picked-up images each exhibiting a white void, but the proper picture 2K"a and the proper picture 1K"c are displayed on the monitor 150. In other words, the monitor picture 3K" is displayed on the monitor 150 as a proper picture.

The proper picture 2K"a of the monitor picture 3K" is not real-time picture obtained in the current photographing (for the third frame) but a picture that quite immediately precedes by one frame. Further, the proper picture 1K"c of the monitor picture 3K" is not real-time picture obtained in the current photographing but a picture that quite immediately precedes by two frames. Therefore, there is no significant difference between the actually-photographed contents and the display contents of the monitor picture 3K".

Then, the image data on the picked-up image 2K'a, the picked-up image 3K'b, and the picked-up image 1K'c based on which the monitor picture 3K" is displayed is stored into the memory 144 as the image data 3Mk (Step S7).

The contents of the image data 3Mk are image data 2K'am, which is the image data on the picked-up image 2K'a, image data 3K'bm, which is the image data on the picked-up image 3K'b, and image data 1K'cm, which is the image data on the picked-up image 3K'c.

Also displayed as the monitor pictures, which are displayed on the monitor 150 in the case of performing the subsequent photographing, namely, photographing the fourth frame, the fifth frame, the sixth frame..., are pictures on which the replacement processing for an image has been performed in the same manner as performed on the above-mentioned first to third frames. Therefore, pictures obtained by photographing the subjects can be observed on the monitor 150 in a state where there is neither a white void nor a black solid.

The above-mentioned camera apparatus 100 is described by taking the example where it is judged on a pixel basis whether or not the light-receiving level of the image-pickup element 130 is within a predetermined level. Instead of thus judging on the pixel basis, whether or not the light-receiving level is within a predetermined level may be judged for each of areas that are obtained by dividing the image-pickup area of the image-pickup element 130 in, for example, a matrix shape, and the replacement of the image data may be performed on a basis of the area. For example, it is judged whether or not an average of the light-receiving levels of the pixels within the area is within the predetermined light-receiving level, and if not within the predetermined level, the image data is replaced by image data on another picked-up image which is located in the corresponding area position and whose light-receiving level is within the predetermined light-receiving level.

In the case of performing replacement of an image on the area basis, it is preferable to make each area as small as possible so that there is a smaller difference in the light-receiving level between the pixels within the area. In other words, for example, in a case where there are a high luminance subject in a half of the area and a low luminance subject in the other half, even if the photographing is performed by changing the frame rate, it is sometimes impossible to set the light-receiving levels of the picked-up image of both the subjects simultaneously to a predetermined light-receiving level. Therefore, the size of the area, namely, the number of pixels within the area, a shape of the area, and the like are determined according to the contents of the subjects to be photographed.

For example, in a case where a large number of subjects are photographed by using the photographic lens 121 having a wide angle of view as in this embodiment, each one of the subjects are imaged on the image-pickup surface within a narrow imaging range, and moreover, there may be a strong tendency of the luminance to greatly vary between the respective subjects. In such a case, it is preferable to reduce the size of the area.

In contrast, in a case where the number of the subject becomes small by narrowing the angle of view of the photographic lens 121, and where it is expected that there is little difference in the luminance between the subjects, the size of the area can be made larger to thereby increase the speed of the image processing.

Further, the above-mentioned camera apparatus 100 is described by taking the example where the picture of the subject is observed in real time through the monitor 150, but the picked-up images obtained by the photographing at different frame rates may be stored in the memory 144, and the image data to be replaced may be image data on the picked-up image obtained by the photographing after a time instant at which the picked-up image having the image data to be replaced was obtained by the photographing.

Further, the above-mentioned camera apparatus 100 is configured so that the frame rate is changed every frame to thereby change the exposure time every frame, but the frame rate may be changed at an appropriate timing, for example, every several frames, according to the change of the subject and the change in the luminance of the subject.

Note that after the setting of the frame rate is adjusted to the bright part and the dark part of the subject, the high frame rate adjusted to the bright part of the subject and the low frame rate adjusted to the dark part of the subject may be alternately used as long as there is no significant change in the brightness of the subject. In other words, the light-receiving level judging for the picked-up image (above-mentioned Step S4) may be performed not every frame but only first two times, after which those frame rates may be used. Alternatively, the light-receiving level judging (above-mentioned Step S4) may be performed intermittently, for example, once every several times or once every several seconds.

Further, in the above-mentioned camera apparatus 100, the frame rate is changed to thereby change the exposure time for the image-pickup element 130, but the exposure time may be changed by making the storage time of the image-pickup element 130 electrically variable. In other words, the image-pickup element 130 may be operated as a so-called electronic shutter. In a case where the image-pickup element 130 is thus operated as the electronic shutter, instead of changing the frame rate as described above, a shutter speed for the image-pickup element 130 is changed for each frame.

That is, the frame rate setting section 143a of FIG. 2 is configured as a shutter speed setting section, and in the frame rate setting (Step S1) of FIG. 3, a processing of setting the shutter speed is performed.

Specifically, for example, prior to the start of the photographing, instead of setting the frame rate in Step S1, the shutter speed is set to 1/60 seconds as a standard shutter speed. Then, the first frame is photographed at this shutter speed.

With regard to the picked-up image obtained by the photographing at this standard shutter speed, the light-receiving level is measured (Step S3), and it is judged whether or not each pixel of the picked-up image has a light-receiving level within the predetermined light-receiving level (Step S4). Then, at the second frame, based on the result of measuring the light-receiving level in Step S3, the shutter speed is set so that the pixel exhibiting a white void or a black solid in the photographing at the first frame is exposed with proper exposure.

In order to keep the high luminance part exhibiting a white void from exhibiting the white void, the shutter speed is set to, for example, 1/90 seconds so as to shorten the exposure time. In addition, in order to keep the low luminance part exhibiting a black solid from exhibiting the black solid, the shutter speed is set to, for example, 1/30 seconds so as to lengthen the exposure time. Also in the subsequent photographing, the frames are subj ected to the same operation as the operation of the camera apparatus 100 described above by referring to FIGS. 3 to 6 except that the setting of the shutter speed is performed instead of the setting of the frame rate.

Note that instead of operating the image-pickup element 130 as the electronic shutter, a so-called mechanical shutter may be disposed in front of the image-pickup element 130 (on a subject side), and the exposure time may be controlled by the mechanical shutter.

Further, in the above-mentioned camera apparatus 100, the frame rate is changed to thereby change the exposure time for the image-pickup element 130, but since it is important to change a total amount of exposure amounts, the optical system 120 may be provided with a variable iris, and by controlling an aperture amount of the variable iris, the exposure amount per unit time may be changed at a predetermined timing. However, the exposure time can be changed more easily at an earlier timing by changing the frame rate to thereby change the exposure time for the image-pickup element 130.

Further, in the frame rate setting (Step S1), each of the luminance levels of a bright portion and a dark portion of the subject before the start of the photographing may be measured to previously set 2 or 3 or more frame rates in accordance with each of the luminance levels. Then, those frame rates may be used in an appropriate order to perform the photographing. By increasing the number of frame rates to be set and increasing the number of picked-up images picked up at different frame rates, a properly exposed part is selected therefrom to be composited, thereby allowing an increase in image quality of the monitor picture.

The above-mentioned embodiment is described by taking the example of the parts in which the parts of the white void and the black solid are generated, but even in a case where such a white void or black solid is not generated, the picked-up image picked up at a high frame rate and the picked-up image picked up at a low frame rate may be obtained and composited with each other. In the case of compositing the picked-up images, the bright part in the picked-up image picked up at the high frame rate is composited with the dark part in the picked-up image picked up at the low frame rate.

In this case, without performing the light-receiving level judging in the above-mentioned Step S5 on the picked-up image picked up at the high frame rate and the picked-up image picked up at the low frame rate adjacent thereto, the two picked-up images may be composited with each other to be displayed on the monitor 150.

As a part other than the bright part and the dark part, a part of the picked-up image picked up at the high frame rate is employed, or a part of the picked-up image picked up at the low frame rate is employed, thereby generating a picked-up image including the parts of the white void and the black solid, which is high in clarity as a whole. The brightness used for the part other than the bright part and the dark part may have an intermediary value between the luminances of the picked-up image picked up at the high frame rate and the picked-up image picked up at the low frame rate.

The above-mentioned embodiment is described by taking the example in which the camera apparatus 100 includes the monitor 150, but the camera apparatus 100 may be configured to exclude the monitor 150. In this case, the picture can be displayed on a monitor of a personal computer or the like connected to the camera apparatus 100 via the network. In this case, it is assumed that the image processing of Step S4 to Step S8 is performed on the personal computer or the like, and the camera apparatus 100 may be configured to include the personal computer or the like connected thereto via the network.

## Claims

1. A camera apparatus, comprising:
a photographic lens;
image-pickup means on which light from a subject transmitted through the photographic lens is imaged; and
image processing control means for performing an image processing on image data on a picked-up image obtained by imaging the light on the image-pickup means,
the subject being continuously photographed,
wherein the camera apparatus further comprises:
exposure time changing means for changing an exposure time for the image-pickup means between at least 2 stages of exposure times at a predetermined timing;
light-receiving level measuring means for measuring a light-receiving level of the image-pickup means in units of parts of the picked-up image;
light-receiving level judging means for judging whether or not the light-receiving level of the image-pickup means which has been measured in units of parts is within a predetermined light-receiving level; and
image replacing means for replacing, if a part whose light-receiving level has been judged by the light-receiving level judging means is an improper light-receiving level part whose light-receiving level is not judged as being within the predetermined light-receiving level, image data on the improper light-receiving level part by image data on a proper light-receiving level part which is a part of another picked-up image in a position of an image corresponding to the improper light-receiving level part and whose light-receiving level is judged as being within the predetermined light-receiving level.

2. A camera apparatus according to claim 1, wherein if there are a plurality of picked-up images having the proper light-receiving level part to replace the improper light-receiving level part, the improper light-receiving level part is replaced by the proper light-receiving level part of a picked-up image picked up at a timing the closest to a timing at which the picked-up image having the improper light-receiving level part is picked up.

3. A camera apparatus according to claim 1 or 2, wherein the exposure time changing means changes the exposure time every frame picked up by the image-pickup means.

4. A camera apparatus according to any one of claims 1 to 3, wherein the exposure time changing means comprises frame rate changing means.

5. A camera apparatus according to any one of claims 1 to 3, wherein the exposure time changing means comprises shutter speed changing means.

6. A camera apparatus according to any one of claims 1 to 5, wherein one exposure time of the at least 2 stages of exposure times comprises an exposure time that causes the light-receiving level of the improper light-receiving level part to be within the predetermined light-receiving level.

7. A camera apparatus according to any one of claims 1 to 6, wherein the photographic lens comprises a wide-angle lens.

8. An image processing method of performing an image processing on a picked-up image of a subject obtained by imaging light therefrom on image-pickup means by a photographic lens, comprising:
exposure time changing step of changing an exposure time for the image-pickup means between at least 2 stages of exposure times at a predetermined timing;
light-receiving level measuring step of measuring a light-receiving level of the image-pickup means in units of parts of the picked-up image;
light-receiving level judging step of judging whether or not the light-receiving level of the image-pickup means which has been measured in units of parts is within a predetermined light-receiving level; and
image replacing step of replacing, if a part whose light-receiving level has been judged by the light-receiving level judging step is an improper light-receiving level part whose light-receiving level is not judged as being within the predetermined light-receiving level, image data on the improper light-receiving level part by image data on a proper light-receiving level part which is a part of another picked-up image in a position of an image corresponding to the improper light-receiving level part and whose light-receiving level is judged as being within the predetermined light-receiving level.

9. A camera apparatus, comprising:
a photographic lens;
image-pickup means on which light from a subject transmitted through the photographic lens is imaged; and
image processing control means for performing an image processing on image data on a picked-up image obtained by imaging the light on the image-pickup means,
the subject being continuously photographed,
wherein high clarity parts of a plurality of picked-up images which are obtained by changing an exposure time for the image-pickup means between at least 2 stages of exposure times during photographing and which are different in the exposure time are composited with each other to record or display a picked-up image high in clarity as a whole.

10. An image processing method of performing an image processing on a picked-up image of a subject obtained by imaging light therefrom on image-pickup means by a photographic lens, wherein:
an exposure time for the image-pickup means is changed between at least 2 stages of exposure times during photographing to obtain a plurality of picked-up images different in the exposure time; and
high clarity parts of the plurality of picked-up images different in the exposure time are composited with each other to record or display a picked-up image high in clarity as a whole.
